# FASCICULE DE BREVET EUROPEEN

(11) **EP 2 347 275 B1**
(45) Date de publication et mention de la délivrance du brevet: **24.10.2012**
(21) Numéro de dépôt: 09768122.5
(22) Date de dépôt: 02.11.2009
(51) Int. Cl.: G01S 19/08

(54) **SYSTÈME DE SURVEILLANCE D'UNE CONSTELLATION SATELLITAIRE D'UN SYSTÈME DE POSITIONNEMENT.**
SYSTEM ZUR ÜBERWACHUNG DER SATELLITENKONSTELLATION EINES POSITIONSBESTIMMUNGSSYSTEMS
SYSTEM FOR MONITORING SATELLITE CONSTELLATION OF A POSITIONING SYSTEM

(30) Priorité: 05.11.2008 FR 0806162
(43) Date de publication de la demande: 27.07.2011
(73) Titulaire: ASTRIUM SAS, 92150 Suresnes (FR)
(72) Inventeur: LAINÉ, Robert, F-17138 St Xandre (FR)
(74) Mandataire: Hauer, Bernard
(86) Numéro de dépôt international: PCT/FR2009/052107
(87) Numéro de publication internationale: WO 2010/052414

(56) Documents cités:
- EP-A- 1 876 465
- US-A1- 2004 193 373
- ENGE P ET AL: "Architecture for a Civil Integrity Using Inmarsat" ION GPS/GNSS, XX, XX, 1 septembre 1990 (1990-09-01), pages 287-296, XP002415357
- CAPORICCI L ET AL: "GPS integrity monitoring and system improvement with ground station and multistationary satellite support" 500 YEARS AFTER COLUMBUS - NAVIGATION CHALLENGES OF TOMORROW. MONTEREY, CA., MAR. 23 - 27, 1992; [PROCEEDINGS OF THE POSITION LOCATION AND NAVIGATION SYMPOSIUM (PLANS)], NEW YORK, IEEE, US, 23 mars 1992 (1992-03-23), pages 559-565, XP010056416 ISBN: 978-0-7803-0468-0

## Description

La présente invention concerne un système de surveillance d'une constellation satellitaire.

Plus particulièrement, elle concerne la vérification des signaux de positionnement provenant de satellites (de positionnement) d'un système usuel de positionnement par satellites, par exemple de type GALILEO, GPS ou GLONASS.

On sait que les systèmes de positionnement par satellites comportent une constellation de satellites qui sont placés sur des orbites de moyenne altitude (de l'ordre de 25 000 km) autour de la Terre. Ces satellites et leurs orbites sont généralement désignés dans la technique par "satellites MEO" et "orbites MEO", respectivement (pour "Medium Earth Orbit"). Les satellites MEO sont répartis uniformément dans plusieurs plans orbitaux, de façon que, en tout point de la Terre, un utilisateur puisse voir plusieurs satellites MEO, c'est-à-dire se trouver en lignes directes avec ceux-ci (au moins trois, mais quatre si l'utilisateur désire connaître son altitude) et en déduire ses propres coordonnées terrestres. Chaque satellite MEO emporte une horloge atomique de hautes stabilité et précision, ainsi qu'un équipement électronique qui adresse aux utilisateurs des signaux de positionnement comportant l'heure corrigée (ramenée à une référence commune) et les éphémérides du satellite. A partir de ces signaux de positionnement reçus de plusieurs satellites MEO, l'utilisateur détermine sa distance aux divers satellites en visibilité et en déduit donc sa position en coordonnées terrestres. La présente invention a pour objet de vérifier l'intégrité de ces signaux de positionnement.

On sait que des solutions usuelles utilisent des stations terriennes spécialisées à cet effet. Ces stations fixes comparent en permanence les informations reçues des satellites (via les signaux de positionnement) avec leur position effective connue précisément, pour détecter éventuellement une erreur de cohérence des signaux reçus. Les éventuels écarts locaux sont transmis à un ou plusieurs centres de contrôle qui traitent les informations et identifient le ou les satellites transmettant des signaux de positionnement erronés. Ces informations de qualité des signaux de positionnement reçus sont ensuite transmises aux utilisateurs, afin qu'ils ignorent les signaux erronés dans leur calcul de positionnement.

Les causes d'erreurs dans les signaux de positionnement reçus peuvent être classées en deux grandes catégories, à savoir :
- des erreurs communes dues aux satellites. Ces erreurs sont principalement dues à la dérive de l'horloge embarquée donnant la référence de temps, aux dérives des paramètres orbitaux des satellites ou à des anomalies de traitement à bord des satellites ; et
- des erreurs locales dues à la propagation des signaux à travers l'atmosphère et/ou à des phénomènes de trajets multiples locaux. Ces erreurs sont variables dans le temps, n'affectent simultanément qu'un nombre limité d'utilisateurs, et ne sont pas de la responsabilité directe de l'opérateur qui n'a aucun moyen de les corriger, puisqu'elles dépendent de phénomènes physiques naturels.

Comme les systèmes de positionnement satellitaires utilisent tous la mesure de différences de temps d'arrivée des signaux de positionnement émis par les satellites pour calculer la position terrestre, et comme les deux catégories d'erreur indiquées ci-dessus présentent un effet identique, c'est-à-dire une erreur temporelle des signaux reçus par l'utilisateur, il est facile de confondre une erreur de propagation locale avec une erreur temporelle du signal envoyé par les satellites. Pour essayer de lever cette ambiguïté, des centres de traitement spécialisés collectent les informations provenant de nombreuses stations au sol et, par un calcul essentiellement statistique, séparent la part d'erreur commune de la part d'erreur locale. En effet, seule la part d erreur commune, c'est-à-dire bette provenant d'un ou plusieurs satellites, mérite d'être signalée a tous les utilisateurs. Ce traitement complexe prend du temps, car il faut attendre d'avoir assez d'informations pour distinguer sans ambiguïté ce qui est local à une ou plusieurs stations (tel qu'un effet ionosphérique ou une géomètrie de la constellation menant à des trajets multipiesl de ce qui est commun à toutes les stations et dont la cause ne peut donc être située qu'à bord d'un ou plusieurs satellites

Jusqu`à ce que l'identification positive du ou des satellites erronés soit terminée, tous les utilisateurs vont faire une erreur dans leur calcul de positionnement avec potentiellement des consequences graves en particulier pour les mobiles. On comprend aisément que réduire le temps d'identification de signaux de positionnement (satellitaires) erronés est une priorité pour tout opérateur d'un tel système de positionnement, soucieux de garantir aux utilisateurs la qualité de son système

Par ailleurs, par le document EP-1 876 465, on connait un système de détermination d'informations de navigation pour un système de navigation par satellites Selon ce document, des stations de surveillance de satellites, situées dans des engins spatiaux, collectent les messages de navigation diffusés par les satellites et effectuent des mesures de pseudo-distances qui les séparent des saletés en vue Chaque mesure de pseudo-distance et le message de navigation correspondant sont communiqués par chaque station de surveillance à des centres de calcul, qui sont chargés de contrôleur la cohérence entre les mesures de pseudo-distance et les informations de position contenues dans les messages de navigation afin de déterminer pour chaque satellite une informations d'intégrité,

La présente invention a pour objet de remédier aux inconvenients précités Elle concerne un système de surveillance qui est destiné à surveiller des signaux de positionnement émis par une constellation satelltraire faisant partie d'un système de positionnement par exemple de type GAPS, GALILEO ou GLONASS, et qui permet de remédier aux inconvénients précités,

A cet effet, selon l'invention, ledit système de surveillance est remarquable en ce qu'il comporte :
- au moins un satellite de surveillance qui est placé en orbite à une altitude inférieure à celle des satellites de ladite constellation satellitaire de maniére à pouvoir recevoir les signaux de positionnernent émis par ces satellites à destination de la Terre, et qui comporte au moins les moyens embarqués suivants :
   ■ au moins un récepteur qui est susceptible de recevoir directement des signaux de positionnement émis par des satellites de ladite constellation satellitaire ;
   ■ au moins une unité de traitement qui est formée de manière à vérifier l'intégrité desdits signaux de positionnement reçus, en utilisant une information de position qui est indépendante de ces signaux de positionnement, et à déterminer le cas échéant le ou les satellites ayant émis des signaux de positionnement erronés ; et
   ■ au moins un émetteur qui est susceptible d'émettre vers la Terre des données d'intégrité indiquant, le cas échéant, le ou les satellites de ladite constellation satellitaire dont les signaux de positionnement sont erronés ;
- au moins un centre de contrôle qui est agencé sur la Terre, qui contrôle ledit satellite de surveillance, qui détermine son orbite, et qui comporte des moyens susceptibles de recevoir des données d'intégrité émis par ce satellite de surveillance ; et
- au moins un centre de distribution de messages d'intégrité qui est agencé sur la Terre et qui comprend :
   ■ des moyens pour recevoir des données d'intégrité du satellite de surveillance, qui sont transmises par ledit centre de contrôle ;
   ■ des moyens pour déterminer, à partir de ces données d'intégrité, des messages d'intégrité relatifs à des satellites de ladite constellation satellitaire du système de positionnement ; et
   ■ des moyens pour émettre ces messages d'intégrité à destination d'utilisateurs.

Ainsi, grâce à l'invention, au lieu d'utiliser des stations fixes prévues au sol pour surveiller la constellation de satellites d'un système de positionnement, le système de surveillance utilise au moins un satellite de surveillance qui est situé à une altitude inférieure à celles des satellites de ladite constellation satellitaire de manière à pouvoir recevoir les signaux de positionnement émis par ces derniers (et destinés à des utilisateurs du système de positionnement), mais qui est placé en orbite de manière à éviter l'apparition d'erreurs locales telles que celles décrites ci-dessus, dues notamment à des phénomènes de trajets multiples locaux ou à des retards de propagation.

On obtient, par conséquent, un système de surveillance particulièrement fiable, qui permet notamment de détecter, de façon autonome et rapide, et sans ambiguïté, des signaux de positionnement erronés émis par un ou plusieurs satellites du système de positionnement surveillé, en utilisant à cet effet une information de position qui est indépendante desdits signaux de positionnement.

Dans un mode de réalisation préféré, ledit système de surveillance comporte une pluralité de satellites de surveillance tels que celui précité, qui sont tous placés à des orbites plus basses que les satellites de la constellation et qui mettent en oeuvre les fonctions précitées.

De façon avantageuse, chaque satellite de surveillance comporte, de plus, des moyens auxiliaires embarqués, permettant de déterminer (à l'aide d'informations reçues dudit centre de contrôle) une première position dans l'espace dudit satellite de surveillance, sans utiliser lesdits signaux de positionnement émis par des satellites de la constellation satellitaire, et ladite unité de traitement comporte :
- des premiers moyens pour calculer au moins une seconde position, à l'aide desdits signaux de positionnement reçus de satellites de la constellation satellitaire ;
- des deuxièmes moyens pour comparer entre elles lesdites première et seconde positions ; et
- des troisièmes moyens pour en déduire, le cas échéant, l'existence de signaux de positionnement erronés.

En outre, dans un mode de réalisation préféré :
- lesdits premiers moyens sont formés de manière à calculer une pluralité de secondes positions, chacune desdites secondes positions étant calculée à l'aide des signaux de positionnement reçus d'un sous-groupes de satellites de ladite constellation satellitaire, chacun desdits sous-groupes comprenant un même premier nombre prédéterminé de satellites (par exemple quatre satellites) et deux sous-groupes quelconques ayant en commun à chaque fois, au plus, un second nombre prédéterminé de satellites (par exemple deux satellites) ;
- lesdits deuxièmes moyens sont formés de manière à comparer chacune de ces secondes positions à ladite première position ; et
- lesdits troisièmes moyens sont formés de manière à déterminer, le cas échéant, le ou les satellites dont les signaux de positionnement sont erronés, à l'aide des résultats des comparaisons mises en oeuvre par lesdits deuxièmes moyens et de la composition desdits sous-groupes.

En outre, chaque satellite de surveillance comporte, de plus, une antenne de réception unique qui est associée audit récepteur, qui est positionnée de manière à éviter des trajets multiples, et qui est entourée d'un écran de protection électromagnétique pour éliminer des modes de propagation indésirables(par réflexion ou diffraction des signaux de positionnement sur la structure dudit satellite de surveillance), ce qui permet d'éliminer les phénomènes les plus fréquents susceptibles de perturber la réception des signaux par l'antenne.

Dans un mode de réalisation préféré, ledit ou lesdits satellites de surveillance sont placés à des orbites :
- présentant des altitudes plus élevées que celles des couches denses de la ionosphère, ce qui permet d'éviter l'apparition de retards ionosphériques dus au passage des signaux de positionnement à travers les couches denses de la ionosphère ; et/ou
- présentant un plan différent des plans des orbites desdits satellites de la constellation satellitaire, afin de maximiser la précision de détection des erreurs.

Par ailleurs, dans un mode de réalisation préféré, lesdits centres de contrôle et de distribution sont situés au même endroit et font partie d'un seul et même centre de gestion.

En outre, de façon avantageuse, ledit centre de contrôle comprend de plus :
- des moyens de commande à distance de chacun desdits satellites de surveillance ; et
- des moyens de calcul de paramètres orbitaux du ou desdits satellites de surveillance et de mise à jour d'unités de traitement embarquées sur ce ou ces satellites de surveillance.

En outre, avantageusement, ledit centre de distribution comprend, de plus, des moyens de codage pour coder les messages d'intégrité avant leur émission de manière à réserver l'utilisation de ces informations à des clients particuliers (ayant par exemple souscrit un abonnement) munis de moyens de décodage appropriés.

Les figures du dessin annexé feront bien comprendre comment l'invention peut être représentée. Sur ces figures des références identiques, désignent des éléments semblables.

La figure 1 représente schématiquement l'architecture d'un système de surveillance conforme à l'invention.

La figure 2 montre schématiquement les principaux moyens qui sont embarqués sur un satellite de surveillance faisant partie d'un système de surveillance conforme à l'invention.

La figure 3 est le schéma synoptique d'une unité de traitement d'un satellite de surveillance conforme à l'invention.

Les figures 4 et 5 montrent schématiquement les moyens principaux respectivement d'un centre de contrôle et d'un centre de distribution.

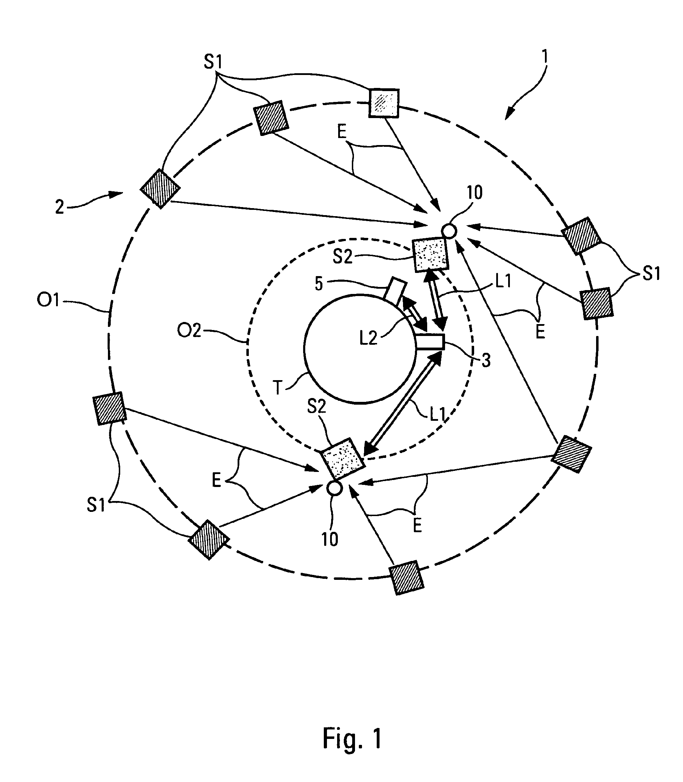

Le système de surveillance 1 conforme à l'invention et représenté selon une architecture schématique sur la figure 1 est destiné à surveiller un système de positionnement par satellites usuel, par exemple de type GALILEO, GPS ou GLONASS, ainsi que les satellites d'augmentation tels que EGNOSS.

Sur la figure 1, on a simplement représenté une constellation satellitaire 2 d'un tel système de positionnement. Cette constellation satellitaire 2 comporte une pluralité de satellites S1 qui sont placés en orbite autour de la Terre T à une orbite 01 qui est, généralement, de moyenne altitude (de l'ordre de 20 000 à 25 000 km) .

Le système de surveillance 1 conforme à l'invention a plus particulièrement pour objet de surveiller les signaux de positionnement émis par les satellites S1 de cette constellation satellitaire 2 du système de positionnement. On sait que, de façon usuelle, ces signaux de positionnement sont utilisés par des utilisateurs du système de positionnement pour déterminer notamment leur position, et éventuellement leur vitesse.

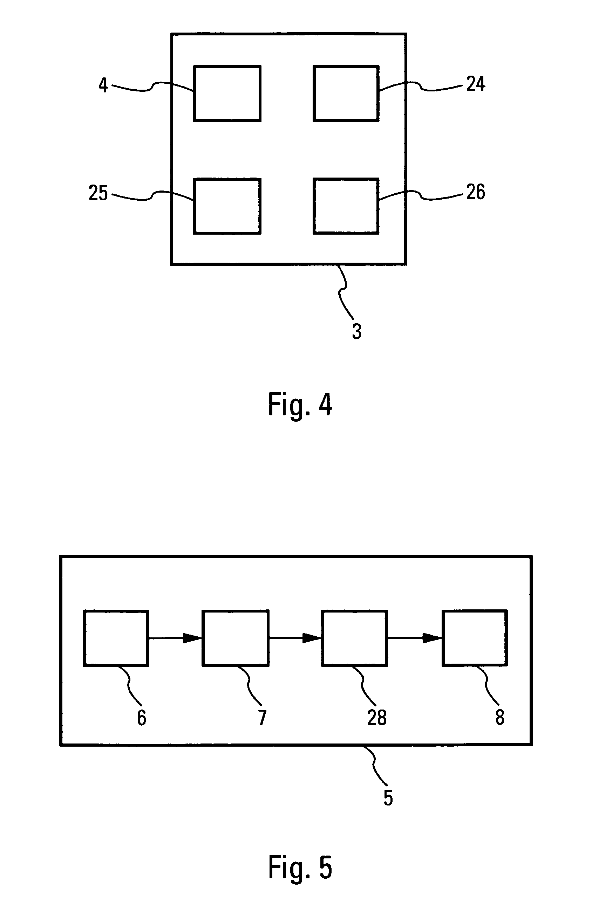

Selon l'invention, ledit système de surveillance 1 comporte pour ce faire :
- au moins un, mais de préférence une pluralité de satellites de surveillance S2. Ces satellites de surveillance S2 sont placés en orbite autour de la Terre T, à une orbite 02 qui présente une altitude, par exemple de 2000 à 3000 mètres, qui est inférieure à celle (de l'ordre de 20 000 à 25 000 mètres) des satellites S1 de ladite constellation satellitaire 2 de manière à pouvoir recevoir, comme illustré par des flèches E, les signaux de positionnement émis par un grand nombre de satellites S1 à destination de la Terre T ;
- au moins un centre de contrôle 3 qui est agencé sur la Terre T, qui contrôle lesdits satellites de surveillance S2, et qui comporte des moyens 4 susceptibles de recevoir des données d'intégrité émis par ces satellites de surveillance S2. Les liaisons L1 de transmission de données entre le centre de contrôle 3 et les satellites de surveillance S2 sont de type usuel, à base d'ondes électromagnétiques ; et
- au moins un centre 5 de distribution de messages d'intégrité qui est agencé sur la Terre T et qui comprend, comme représenté sur la figure 5 :
   ■ des moyens 6 pour recevoir les données d'intégrité émises par lesdits satellites de surveillance S2 et transmises par ledit centre de contrôle 3 ;
   ■ des moyens 7 pour déterminer, à partir de ces données d'intégrité, des messages d'intégrité relatifs à des satellites. S1 de ladite constellation satellitaire 2 du système de positionnement. Ces messages d'intégrité identifient clairement, le cas échéant, le ou les satellites S2 qui émettent des signaux de positionnement erronés ; et
   ■ des moyens 8 pour émettre ces messages d'intégrité à destination d'utilisateurs.

Les utilisateurs du système de positionnement peuvent alors ignorer les signaux de positionnement reçus par les satellites S1 identifiés dans un message d'intégrité et uniquement utiliser les signaux de satellites S1 intègres.

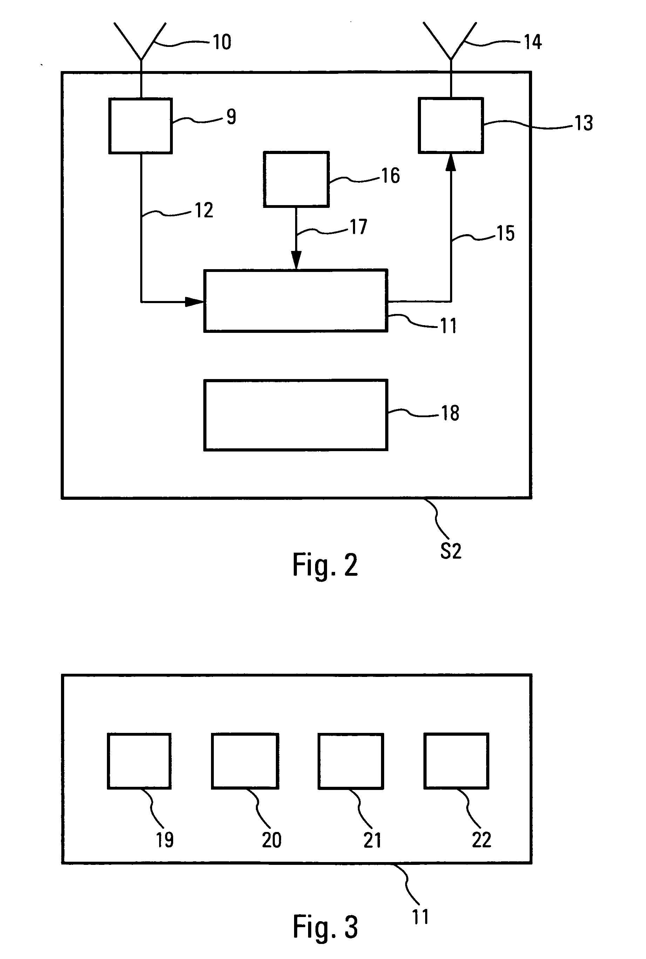

De plus, selon l'invention, chacun des satellites de surveillance S2 du système 1 comporte au moins les moyens embarqués suivants, comme représenté sur la figure 2 :
- au moins un récepteur 9 qui est susceptible de recevoir, à l'aide d'une antenne associée 10, des signaux de positionnement émis par des satellites S1 de ladite constellation satellitaire 2 ;
- au moins une unité de traitement 11 qui est formée de manière à vérifier l'intégrité desdits signaux de positionnement reçus via une liaison 12, en utilisant une information de position (précisée ci-dessous) qui est indépendante de ces signaux de positionnement. De plus, cette unité de traitement 11 est formée de manière à déterminer, le cas échéant, le ou les satellites S1 ayant émis des signaux de positionnement erronés ; et
- au moins un émetteur 13 qui est susceptible d'émettre en direction de la Terre T, comme illustré par la liaison L1, à l'aide d'une antenne associée 14, des données d'intégrité reçues (par une liaison 15) de l'unité de traitement 11 et indiquant, le cas échéant, le ou les satellites S1 de ladite constellation satellitaire 2, dont les signaux de positionnement sont erronés.

Le système de surveillance 1 est donc en mesure de vérifier de façon indépendante l'intégrité du système de positionnement surveillé, en étant en mesure de diffuser des informations sur la qualité des signaux de positionnement émis par les satellites S1 à destination notamment des utilisateurs dudit système de positionnement.

L'intérêt d'utiliser des satellites de surveillance S2, à la place de stations terrestres fixes notamment, est que les signaux de positionnement reçus par de tels satellites de surveillance S2 sont exempts d'erreurs locales telles que des trajets multiples par exemple. A l'aide de satellites de surveillance S2 de ce type, le système de surveillance 1 est donc en mesure de réaliser une détection autonome, rapide et sans ambiguïté des signaux de positionnement erronés émis par un ou plusieurs satellites S1 de la constellation satellitaire 2 du système de positionnement.

Dans un mode de réalisation particulier, lesdits satellites de surveillance S2 sont placés à des orbites O2 :
- qui présentent des altitudes plus élevées que celles des couches denses de la ionosphère, ce qui permet d'éviter l'apparition de retards ionosphériques dus au passage des signaux de positionnement à travers les couches denses de la ionosphère ; et
- qui présentent un plan différent de ceux des orbites 02 desdits satellites S1, afin de maximiser la précision de détection des erreurs.

En outre, dans un mode de réalisation préféré, chaque satellite de surveillance S2 embarque les équipements suivants représentés sur la figure 2, dont certains ont été cités précédemment :
- l'antenne 10 de réception des signaux de positionnement. Cette antenne 10 est positionnée de sorte qu'il n'y ait pas de possibilité de trajets multiples par réflexion ou diffraction des signaux de positionnement sur la structure du satellite de surveillance S2. A cet effet, cette antenne 10 peut également être munie, si besoin, d'un écran de protection électromagnétique usuel (non représenté) qui est destiné à éliminer les modes de propagation indésirables et qui entoure cette antenne 10 ;
- un ou plusieurs récepteurs 9 qui donnent la position de l'antenne 10 du satellite de surveillance S2 par rapport à la constellation de satellites 2 du système de positionnement, ainsi qu'une information temporelle ;
- une horloge 16 de bonne stabilité, qui fournit une référence temporelle indépendante de la constellation satellitaire 2 ;
- une ou plusieurs unités de traitement 11 qui traitent les informations transmises par les récepteurs 9 et l'horloge 16 embarqués (à l'aide de liaisons 12 et 17) et qui sont formées de manière à détecter si un ou plusieurs satellites de positionnement S1 envoient des signaux de positionnement erronés, comme précisé ci-dessous ;
- l'émetteur 13 et son antenne 14 , qui fonctionnent à une fréquence différente de celle des signaux de positionnement et qui transmettent les résultats des traitements mis en oeuvre par la ou les unités de traitement 11 ; et
- un ensemble 18 d'éléments et de fonctionnalités usuels de tout satellite, qui sont notamment destinés à :
   ■ piloter l'altitude et corriger l'orbite 02 du satellite de surveillance S2 ;
   ■ fournir la puissance électrique nécessaire ; et
   ■ assurer un environnement thermique raisonnable aux équipements embarqués.

Dans le cadre de la présente invention, la ou les unités de traitement 11 embarquées sur les satellites de surveillance S2 effectuent les opérations de gestion des satellites S2, ainsi que des opérations spécifiques à la mission de surveillance. En particulier pour réaliser ces dernières opérations, une unité de traitement 11 embarquée comporte les moyens suivants, représentés sur la figure 3 :
- des moyens 19 pour calculer la position en trois dimensions et la vitesse des satellite S1 surveillés, à partir des signaux de positionnement reçus de la constellation satellitaire 2. Ces signaux sont utilisés en sous-groupes uniformément répartis. Chaque sous-groupes comprend un nombre donné de satellites, par exemple quatre satellites, dont pas plus d'un nombre donné (par exemple deux) sont communs à deux sous-groupes ;
- des moyens 20 pour gérer la propagation des paramètres orbitaux du satellite et du temps à bord. Ces paramètres sont chargés initialement à partir du centre de contrôle 3 ;
- des moyens 21 pour engendrer des données d'intégrité qui identifient, le cas échéant, le ou les satellites S1 dont les signaux de positionnement sont erronés. Ces données d'intégrité sont destinées à être transmises au centre de contrôle 3 et à des utilisateurs du système de positionnement ; et
- des moyens 22 pour surveiller l'état de fonctionnement du satellite de surveillance S2 et en particulier la cohérence entre la position en trois dimensions calculée et celle propagée à bord, afin de pouvoir détecter une anomalie de la charge utile embarquée.

Pour ce faire, on peut utiliser une propriété caractéristique du satellite de surveillance S2, selon laquelle il ne peut exister plusieurs positions vraies en trois dimensions pour un même satellite S2, puisque ce dernier ne comporte qu'une seule antenne de réception 10. Cette condition est satisfaite avec d'autant plus de précision que le centre de gravité du satellite de surveillance S2 est proche de la position de l'antenne de réception 10, ce qui est vérifié sur un petit satellite de taille typiquement inférieure à un mètre, et dont l'altitude est connue à quelques degrés près. Dans le cas où le satellite S2 présente une plus grande distance entre son centre de gravité et son antenne de réception 10, les moyens 22 peuvent comporter des moyens de calcul pour réaliser une correction en fonction de l'altitude du satellite S2, afin de maintenir la cohérence entre la position du centre de gravité qui est sur l'orbite 02 estimée et la position de l'antenne de réception 10 qui fournit la position en trois dimensions calculée.

En outre, selon l'invention, lesdits moyens 19 comparent la position 3D calculée pour chaque sous-groupe à une position indépendante estimée à partir des paramètres orbitaux du satellite de surveillance S2, reçus dudit centre de contrôle 3, afin de déterminer s'il existe un écart (supérieur à une valeur prédéterminée). En cas d'absence d'écart significatif, l'unité de traitement 11 conclut que :
- d'une part, la position indépendante, calculée à l'aide des paramètres orbitaux, est exacte ; et
- d'autre part, les signaux de positionnement émis par les satellites du sous-groupe considéré sont tous fiables, puisqu'il est impossible statistiquement dans une telle situation d'être en présence de deux erreurs qui se compensent.

En revanche, en cas de détection d'un écart significatif, lesdits moyens 19 réalisent un calcul régressif pour déterminer quels sont le ou les satellites S1 qui transmettent des signaux erronés. Le principe de calcul est que, si l'un des sous-groupes présente un écart significatif par rapport à la position indépendante estimée, ce sous-groupe contient au moins un satellite S1 dont les signaux de positionnement sont erronés. Aussi, en réalisant une série de permutations des satellites S1 de ce sous-groupe avec ceux d'autres sous-groupes, lesdits moyens 19 sont en mesure d'isoler rapidement le ou les satellites S1 qui sont à l'origine de la ou des erreurs détectées.

Dans un mode de réalisation simplifié (non représenté), le centre de contrôle 3 et le centre de distribution 5 sont situés au même endroit sur la Terre T et font partie d'un seul et même centre de gestion.

Ledit centre de contrôle 3 comprend en particulier, comme représenté sur la figure 4 :
- lesdits moyens 4 de réception de données d'intégrité émises par les satellites de surveillance S2 ;
- des moyens 24 de commande à distance desdits satellites de surveillance S2 via la liaison S1 ;
- des moyens 25 de calcul de paramètres orbitaux desdits satellites de surveillance S2 et de mise à jour des unités de traitement 11 embarquées sur ces satellites de surveillance S2 ; et
- des moyens 26 d'émission de données d'intégrité vers le centre de distribution 5, comme illustré par une liaison L2 sur la figure 1.

Ledit centre de distribution 5 comprend également, en plus des moyens 6, 7 et 8 précités, des moyens de codage 28 pour coder les messages d'intégrité (engendrés par les moyens 7) avant leur émission (à l'aide des moyens 8) à destination d'utilisateurs, de sorte que seuls des utilisateurs accrédités ou ayant payé une redevance puissent décoder les informations d'intégrité. La distribution des clés de décryptage peut être assurée à l'aide de moyens sécurisés usuels. La diffusion des informations d'intégrité (à destination des utilisateurs) peut être réalisée notamment :
- par Internet ; ou
- par des ondes radioélectriques ; ou
- par des moyens existants ou des moyens spécifiques (radio ou télévision, satellites de communication, EGNOSS, ...).

## Revendications

1. Système de surveillance pour surveiller des signaux de positionnement émis par une constellation satellitaire (2) faisant partie d'un système de positionnement, ledit système de surveillance (1) comportant :
- au moins un satellite de surveillance (S2) qui comporte au moins les moyens embarqués suivants :
. au moins un récepteur (9) qui est susceptible de recevoir directement des signaux de positionnement émis par des satellites (S1) de ladite constellation satellitaire (2) ; et
. au moins un émetteur (13) qui est susceptible d'émettre vers la Terre (T) des données d'intégrité indiquant le cas échéant le ou les satellites (S1) de ladite constellation satellitaire (2) dont les signaux de positionnement sont erronés ;
- au moins un centre de contrôle (3) qui est agencé sur la Terre, qui contrôle ledit satellite de surveillance (S2), et qui comporte des moyens (4) susceptibles de recevoir des données d'intégrité émis par ce satellite de surveillance (S2) ; et
- au moins un centre (5) de distribution de messages d'intégrité, qui est agencé sur la Terre (T) et qui comprend :
. des moyens (6) pour recevoir des données d'intégrité du satellite de surveillance (S2), qui sont transmises par ledit centre de contrôle (3) ;
. des moyens (7) pour déterminer, à partir de ces données d'intégrité, des messages d'intégrité relatifs à des satellites (S1) de ladite constellation satellitaire (2) du système de positionnement ; et
. des moyens (8) pour émettre ces messages d'intégrité à destination d'utilisateurs,
**caractérisé en ce que** ledit satellite de surveillance (S2) est placé en orbite (02) à une altitude inférieure à celle des satellites (S1) de ladite constellation satellitaire (2) de manière à pouvoir recevoir les signaux de positionnement émis par ces satellites (S1) à destination de la Terre (T), et **en ce que** ledit satellite de surveillance (S2) comporte, de plus, au moins une unité de traitement (11) qui est formée de manière à vérifier l'intégrité des signaux de positionnement reçus, en utilisant une information de position qui est indépendante de ces signaux de positionnement, à déterminer le cas échéant le ou les satellites (S1) ayant émis des signaux de positionnement erronés, et à former des données d'intégrité correspondantes.

2. Système de surveillance selon la revendication 1,
**caractérisé en ce qu'**il comporte une pluralité de satellites de surveillance (S2).

3. Système de surveillance selon l'une des revendications 1 et 2, **caractérisé en ce que** chaque satellite de surveillance (S2) comporte, de plus, des moyens auxiliaires embarqués (19) permettant de déterminer une première position dans l'espace dudit satellite de surveillance (S2), sans utiliser lesdits signaux de positionnement émis par des satellites (S1) de la constellation satellitaire (2), et **en ce que** ladite unité de traitement (11) comporte :
- des premiers moyens (19) pour calculer au moins une seconde position, à l'aide desdits signaux de positionnement reçus de satellites (S1) de la constellation satellitaire (2) ;
- des deuxièmes moyens (21) pour comparer entre elles lesdites première et seconde positions ; et
- des troisièmes moyens (21) pour en déduire, le cas échéant, l'existence de signaux de positionnement erronés.

4. Satellite de surveillance selon la revendication 3,
**caractérisé en ce que** :
- lesdits premiers moyens (19) sont formés de manière à calculer une pluralité de secondes positions, chacune desdites secondes positions étant calculée à l'aide des signaux de positionnement reçus d'un sous-groupes de satellites de ladite constellation satellitaire (2), chacun desdits sous-groupes comprenant un même premier nombre prédéterminé de satellites et deux sous-groupes quelconques ayant en commun à chaque fois, au plus, un second nombre prédéterminé de satellites ;
- lesdits deuxièmes moyens (21) sont formés de manière à comparer chacune de ces secondes positions à ladite première position ; et
- lesdits troisièmes moyens (21) sont formés de manière à déterminer, le cas échéant, le ou les satellites dont les signaux de positionnement sont erronés, à l'aide des résultats des comparaisons mises en oeuvre par lesdits deuxièmes moyens (21) et de la composition desdits sous-groupes.

5. Système de surveillance selon l'une quelconque des revendications précédentes,
**caractérisé en ce que** chaque satellite de surveillance (S2) comporte, de plus, une antenne de réception unique (10) qui est associée audit récepteur (9), qui est positionnée de manière à éviter des trajets multiples, et qui est entourée d'un écran de protection électromagnétique pour éliminer des modes de propagation indésirables.

6. Système de surveillance selon l'une quelconque des revendications précédentes,
**caractérisé en ce que** chaque satellite de surveillance (S2) est placé à une orbite (02) présentant une altitude plus élevée que celle des couches denses de la ionosphère.

7. Système de surveillance selon l'une quelconque des revendications précédentes,
**caractérisé en ce que** chaque satellite de surveillance (S2) est placé à une orbite (02) présentant un plan différent de ceux des orbites (O1 des satellites (S1) de ladite constellation satellitaire (2).

8. Système de surveillance selon l'une quelconque des revendications précédentes,
**caractérisé en ce que** lesdits centres de contrôle et de distribution sont situés au même endroit et font partie d'un seul et même centre de gestion.

9. Système de surveillance selon l'une quelconque des revendications précédentes,
**caractérisé en ce que** ledit centre de contrôle (3) comprend de plus :
- des moyens (24) de commande à distance de chaque satellite de surveillance (S2) ; et
- des moyens (25) de calcul de paramètres orbitaux de chaque satellite de surveillance (S2) et de mise à jour d'unités de traitement (11) embarquées sur chaque satellite de surveillance (S2).

10. Système de surveillance selon l'une quelconque des revendications précédentes,
**caractérisé en ce que** ledit centre de distribution (5) comprend, de plus, des moyens de codage (28) pour coder les messages d'intégrité avant leur émission à destination d'utilisateurs.

## Claims

1. A monitoring system for monitoring positioning signals emitted by a satellite constellation (2) belonging to a positioning system, said monitoring system (1) comprising:
- at least one monitoring satellite (S2) comprising at least the following on-board means:
• at least one receiver (9) being able to directly receive positioning signals emitted by satellites (S1) of said satellite constellation (2); and
• at least one emitter (13) being able to emit to the Earth (T), integrity data indicating, the case being, the satellite(s) of said satellite constellation (2), the positioning signals of which are erroneous;
- at least one control centre (3) being arranged on the Earth, controlling said monitoring satellites (S2), and comprising means (4) able to receive integrity data emitted by such a monitoring satellite (S2); and
- at least one integrity message distributing centre (5) being arranged on the Earth (T) and comprising:
• means (6) for receiving integrity data from the monitoring satellite (S2), being transmitted by said control centre (3);
• means (7) for determining, from such integrity data, integrity messages relating to satellites (S1) of said satellite constellation (2) of the positioning system; and
• means (8) for emitting such integrity messages to users,
**characterized in that** said monitoring satellite (S2) is placed on orbit (02) at an altitude lower than that of the satellites (S1) of said satellite constellation (2) so as to be able to receive the positioning signals emitted by such satellites (S1) to the Earth (T), and **in that** said monitoring satellite (S2) further comprises at least one processing unit (11) being formed so as to check the integrity of the received positioning signals, using a positioning information being independent from such positioning signals, to determine, the case being, the satellites (S1) having emitted erroneous positioning signals, and to form corresponding integrity data.

2. The monitoring system according to claim 1, **characterized in that** it comprises a plurality of monitoring satellites (S2).

3. The monitoring system according to any of claims 1 and 2, **characterized in that** each monitoring satellite (S2) further comprises on-board auxiliary means (19) allowing to determine a first position in the space of said monitoring satellite (S2), without using said positioning signals emitted by satellites (S1) of the satellite constellation (2), and **in that** said processing unit (11) comprises:
- first means (19) for calculating at least one second position, with the help of said positioning signals received from satellites (S1) of the satellite constellation (2);
- second means (21) for comparing therebetween said first and second positions; and
- third means (21) for deducing therefrom, the case being, the existence of erroneous positioning signals.

4. A monitoring satellite according to claim 3, **characterized in that**:
- said first means (19) are formed so as to calculate a plurality of second positions, each one of said second positions being calculated with the help of positioning signals received from a sub-group of satellites of said satellite constellation (2), each one of said sub-groups comprising one first same predetermined number of satellites and two any sub-groups having each time in common, at the most, a second predetermined number of satellites;
- said second means (21) are formed so as to compare each one of these second positions to said first position; and
- said third means (21) are formed so as to determine, the case being, the satellite(s) having its or their positioning signals being erroneous, using the results of the comparisons implemented by said second means (21) and the composition of said sub-groups.

5. The monitoring system according to any of preceding claims,
**characterized in that** each monitoring satellite (S2) further comprises a single receiving antenna (10) being associated with said receiver (9), being positioned so as to avoid multiple paths, and being surrounded with one electromagnetic protective screen for removing unwanted propagation modes.

6. The monitoring system according to any of preceding claims,
**characterized in that** each monitoring satellite (S2) is placed at orbit (02) having a higher altitude than that of the dense layers of the ionosphere.

7. The monitoring system according to any of preceding claims,
**characterized in that** each monitoring satellite (S2) is placed at an orbit (02) having a different plane from those of the orbits (01) of the satellites (S1) of said satellite constellation (2).

8. The monitoring system according to any of preceding claims,
**characterized in that** said control and distribution centres are located at the same place and belong to one single same management centre.

9. The monitoring system according to any of preceding claims,
**characterized in that** said control centre (3) further comprises:
- means (24) for remotely controlling each monitoring satellite (S2); and
- means (25) for calculating orbit parameters of each monitoring satellite (S2) and for updating processing units (11) on-board each monitoring satellite (S2).

10. The monitoring system according to any of preceding claims,
**characterized in that** said distribution centre (5) further comprises coding means (28) for coding integrity messages before they are sent to users.

## Patentansprüche

1. Überwachungssystem zum Überwachen der Positionsbestimmungssignale, die von einer Satellitenkonstellation (2) gesendet werden, die Teil eines Positionsbestimmungssystems ist, wobei das Überwachungssystem (1) Folgendes aufweist:
- mindestens einen Überwachungssatelliten (S2), der mindestens die folgenden bordeigenen Mittel aufweist:
• mindestens einen Empfänger (9), der Positionsbestimmungssignale direkt empfangen kann, die von Satelliten (S1) der Satellitenkonstellation (2) gesendet werden; und
• mindestens einen Sender (13), der Integritätsdaten zur Erde (T) senden kann, die gegebenenfalls den oder die Satelliten (S1) der Satellitenkonstellation (2) angeben, dessen bzw. deren Positionsbestimmungssignale falsch sind;
- mindestens ein Kontrollzentrum (3), das auf der Erde angeordnet ist, das den Überwachungssatelliten (S2) kontrolliert und das Mittel (4) aufweist, die Integritätsdaten empfangen können, die von diesem Überwachungssatelliten (S2) gesendet werden; und
- mindestens ein Zentrum (5) zur Verteilung von Integritätsnachrichten, das auf der Erde (T) angeordnet ist und das Folgendes umfasst:
• Mittel (6), um Integritätsdaten des Überwachungssatelliten (S2) zu empfangen, die durch das Kontrollzentrum (3) übertragen werden;
• Mittel (7), um, ausgehend von diesen Integritätsdaten, Integritätsnachrichten in Bezug auf Satelliten (S1) der Satellitenkonstellation (2) des Positionsbestimmungssystems zu bestimmen; und
• Mittel (8), um diese Integritätsnachrichten an Benutzer zu senden,
**dadurch gekennzeichnet, dass** der Überwachungssatellit (S2) in der Umlaufbahn (02) in einer Höhe platziert ist, die kleiner als die der Satelliten (S1) der Satellitenkonstellation (2) ist, derart, dass er Positionsbestimmungssignale empfangen kann, die von diesen Satelliten (S1) an die Erde (T) gesendet werden, und dass der Überwachungssatellit (S2), darüber hinaus, mindestens eine Auswerteeinheit (11) aufweist, die derart ausgebildet ist, dass sie die Integrität der empfangenen Positionsbestimmungssignale verifiziert, indem eine Positionsinformation verwendet wird, die unabhängig von diesen Positionsbestimmungssignalen ist, dass gegebenenfalls der oder die Satelliten (S1) bestimmt werden, der bzw. die falsche Positionsbestimmungssignale gesendet hat bzw. haben, und dass entsprechende Integritätsdaten gebildet werden.

2. Überwachungssystem nach Anspruch 1, **dadurch gekennzeichnet, dass** es eine Vielzahl von Überwachungssatelliten (S2) aufweist.

3. Überwachungssystem nach einem der Ansprüche 1 und 2, **dadurch gekennzeichnet, dass** jeder Überwachungssatellit (S2), darüber hinaus, bordeigene Hilfsmittel (19) aufweist, die es ermöglichen, eine erste Position im Raum des Überwachungssatelliten (S2) zu bestimmen, ohne die Positionsbestimmungssignale zu verwenden, die von Satelliten (S1) der Satellitenkonstellation (2) gesendet werden, und dass die Auswerteeinheit (11) Folgendes aufweist:
- erste Mittel (19), um mindestens eine zweite Position, mit Hilfe der Positionsbestimmungssignale, die von Satelliten (S1) der Satellitenkonstellation (2) empfangen werden, zu berechnen;
- zweite Mittel (21), um dieser ersten und zweiten Position miteinander zu vergleichen; und
- dritte Mittel (21), um daraus, gegebenenfalls, das Vorliegen von falschen Positionsbestimmungssignalen abzuleiten.

4. Überwachungssatellit nach Anspruch 3, **dadurch gekennzeichnet, dass**:
- die ersten Mittel (19) derart ausgebildet sind, dass sie eine Vielzahl von zweiten Positionen berechnen, wobei jede der zweiten Positionen mit Hilfe der Positionsbestimmungssignale berechnet wird, die von einer Untergruppe von Satelliten der Satellitenkonstellation (2) empfangen werden, wobei jede der Untergruppen ein und dieselbe vorbestimmte erste Anzahl von Satelliten umfasst und zwei beliebige Untergruppen jedes Mal, höchstens, eine vorbestimmte zweite Anzahl von Satelliten gemeinsam haben;
- die zweiten Mittel (21) derart ausgebildet sind, dass sie jede dieser zweiten Positionen mit der ersten Position vergleichen; und
- die dritten Mittel (21) derart ausgebildet sind, dass sie, gegebenenfalls, den oder die Satelliten bestimmen, dessen bzw. deren Positionsbestimmungssignale falsch sind, mit Hilfe von Ergebnissen der Vergleiche, die durch die zweiten Mittel (21) durchgeführt werden, und der Zusammensetzung der Untergruppen.

5. Überwachungssystem nach einem der vorhergehenden Ansprüche, **dadurch gekennzeichnet, dass** jeder Überwachungssatellit (S2), darüber hinaus, eine einzige Empfangsantenne (10) aufweist, die dem Empfänger (9) zugeordnet ist, die derart angeordnet ist, dass sie Mehrfachstrecken vermeidet, und die von einem elektromagnetischen Schutzschirm umgeben ist, um unerwünschte Ausbreitungsmoden zu unterdrücken.

6. Überwachungssystem nach einem der vorhergehenden Ansprüche, **dadurch gekennzeichnet, dass** jeder Überwachungssatellit (S2) in einer Umlaufbahn (02) platziert ist, die eine Höhe aufweist, die größer als die der dichten Schichten der lonosphäre ist.

7. Überwachungssystem nach einem der vorhergehenden Ansprüche, **dadurch gekennzeichnet, dass** jeder Überwachungssatellit (S2) in einer Umlaufbahn (02) platziert ist, die eine Ebene aufweist, die sich von denen der Umlaufbahnen (O1) der Satelliten (S1) der Satellitenkonstellation (2) unterscheidet.

8. Überwachungssystem nach einem der vorhergehenden Ansprüche, **dadurch gekennzeichnet, dass** sich das Kontroll- und Verteilungszentrum an demselben Ort befinden und Teil ein und desselben einzigen Verwaltungszentrums sind.

9. Überwachungssystem nach einem der vorhergehenden Ansprüche, **dadurch gekennzeichnet, dass** das Kontrollzentrum (3) ferner Folgendes umfasst:
- Mittel (24) zum Fernsteuern jedes Überwachungssatelliten (S2); und
- Mittel (25) zum Berechnen von Orbital parametern jedes Überwachungssatelliten (S2) und zum Aktualisieren von Auswerteeinheiten (11), die an Bord jedes Überwachungssatelliten (S2) befindlich sind.

10. Überwachungssystem nach einem der vorhergehenden Ansprüche, **dadurch gekennzeichnet, dass** das Verteilungszentrum (5), darüber hinaus, Codiermittel (28) umfasst, um die Integritätsnachrichten vor ihrer Sendung an Benutzer zu codieren.
